# EUROPÄISCHE PATENTSCHRIFT

(11) **EP 2 382 252 B1**
(45) Veröffentlichungstag und Bekanntmachung des Hinweises auf die Patenterteilung: **24.10.2012**
(21) Anmeldenummer: 09801171.1
(22) Anmeldetag: 23.12.2009
(51) Int. Cl.: C08K 5/11, C08G 18/62, C08G 18/79, C09D 175/04

(54) **LACKZUSAMMENSETZUNG**
PAINT COMPOSITION
COMPOSITION DE VERNIS

(30) Priorität: 24.12.2008 DE 102008063085
(43) Veröffentlichungstag der Anmeldung: 02.11.2011
(73) Patentinhaber: BASF Coatings GmbH, 48165 Münster (DE)
(72) Erfinder: POPPE, Andreas, 97753 Karlstadt (DE); KLEIN, Günter, 48165 Münster (DE); HILGE, Oliver, 48317 Drensteinfurt (DE); NIIMI, Rui, Yokohama 244-0815 (JP)
(74) Vertreter: Leifert & Steffan
(86) Internationale Anmeldenummer: PCT/EP2009/009254
(87) Internationale Veröffentlichungsnummer: WO 2010/072412

(56) Entgegenhaltungen:
- EP-A1- 0 601 725
- DE-A1- 2 550 156
- DE-A1- 19 519 396

## Beschreibung

Die Erfindung betrifft eine Lackzusammensetzung umfassend mindestens ein Bindemittel und mindestens einen Härter. Es handelt sich hierbei um sogenannte 2-Komponenten-Lacke, bei denen Bindemittelkomponente und Härterkomponente erst kurz vor der Applikation gemischt werden. Weiterhin betrifft die Erfindung die Verwendung der Lackzusammensetzung in Klarlacken.

In der DE 27 23117 C2 wird ein Einkomponenten-Einbrennlack mit einem OH-Monomer, einem Aminoplast-Vernetzer und einer Komponente, die eine "verkappte" Diisocyanat-Einheit enthält, beschrieben. Mit dieser Zusammensetzung sollen flüssige Einbrennlacke mit einem hohen Festkörpergehalt bereitgestellt werden. Solche Lacke enthaltend blockierte Isocyanate weisen gute Glanz- und Härteeigenschaften auf.

Die DE 23 42 603 beschreibt ein Verfahren zur Herstellung von Malonester-Addukten, bei dem Malonester mit aliphatischen Biuretverbindungen zur Reaktion gebracht werden. Die Mischung hat den Vorteil, dass sie mit üblichen Lacklösemitteln klar verdünnt werden kann.

Die DE 25 50 156 offenbart ein Verfahren zur Herstellung von Polyisocyanatgemischen, die blockierte Isocyanate enthalten. Solche Gemische können in Polyurethan-Einbrennlacken verwendet werden.

Die DE 24 36 872 beschreibt ein Verfahren zur Herstellung einer Verbindung aus Malonester und einem Diisocyanat in Gegenwart katalytischer Mengen eines Alkoholats. Mit diesem Verfahren soll ein verkapptes Diisocyanat hergestellt werden, dass insbesondere in Lacken Verwendung findet und gut zu verarbeiten ist.

Aus dem Stand der Technik sind somit Lackzusammensetzungen bekannt, die mit CH-aciden-Verbindungen blockierte Polyisocyanate enthalten. Für die Reaktion zwischen Polyisocyanat und CH-acider Verbindung werden bevorzugt Alkoholate oder Phenolate als Katalysatoren eingesetzt. Das heißt, für eine erfolgreiche Blockierung von Polyisocyanaten mit CH-aciden Verbindungen werden stets starke Basen verwendet. Die Umsetzung wird bei erhöhter Temperatur, beispielsweise bei 80°C, durchgeführt.

Der Stand der Technik erwähnt allerdings keine Lackzusammensetzungen mit vorteilhaften Eigenschaften, in denen (Poly)Isocyanate neben CH-aciden-Verbindungen vorliegen, ohne dass eine Reaktion zwischen (Poly)Isocyanaten und CH-aciden-Verbindungen stattfindet.

Aufgabe der vorliegenden Erfindung ist es, Lackzusammensetzungen zur Verfügung zu stellen, die eine verbesserte Verträglichkeit gegenüber Stammlacken, eine verbesserte Oberflächengüte (Appearance) und eine gute Härte aufweisen.

Die Aufgabe wird durch die technische Lehre der unabhängigen Patentansprüche gelöst. Vorteilhafte Weiterbildungen finden sich in den abhängigen Ansprüchen, der Beschreibung und den Beispielen.

Überraschenderweise wurde gefunden, dass eine Lacksammensetzung umfassend mindestens (a) ein Bindemittel und (b) mindestens einen Härter, dadurch gekennzeichnet, dass der Härter aus einer Mischung mindestens eines (b1) aliphatischen Polyisocyanats und mindestens einer (b2) CH-aciden Verbindung besteht oder diese enthält, die Aufgabe löst.

Eine Reaktion zwischen (Poly)Isocyanaten und CH-aciden-Verbindungen ist dabei unerwünscht und soll, wenn möglich, vermieden werden. Dies kann durch die Abwesenheit basischer Katalysatoren und die Vermeidung von Temperaturen oberhalb von 90°C erzielt werden.

Als Komponente (a) der erfindungsgemäßen Lackzusammensetzung wird ein Bindemittel eingesetzt. Geeignete Bindemittel reagieren mit den NCO-Gruppen der Härtermischung. Als Bindemittel sind im Besonderen alle OH-Gruppen tragenden Harze geeignet, wie z.B. Polyester-Polyole, Polyether-Polyole, (Meth)acrylatpolyole oder auch Mischungen davon.

Der erfindungsgemäße Härter (b) enthält das Polyisocyanat (b1) und die CH-acide Verbindung (b2). Unter CH-aciden Verbindungen werden Verbindungen verstanden, die keine basischen Eigenschaften besitzen, aber in Gegenwart von Basen deprotoniert werden können (siehe Autorenkollektiv, "Organikum", Deutscher Verlag der Wissenschaften, 1990, S. 442 ff.).

Als Polyisocyanate (b1) werden aliphatische wie auch cycloaliphatische Polyisocyanate eingesetzt, die mindestens zwei NCO-Gruppen pro Molekül tragen. Vorzugsweise werden Di-Isocyante, wie zum Beispiel 3-Isocyanatmethyl-3,3,5-trimethyl-cyclohexyl-isocyanat (IPDI) und Hexamethylendiisocyanat (HDI) verwendet. Die Strukturformeln von IPDI und HDI sind untenstehend gezeigt.

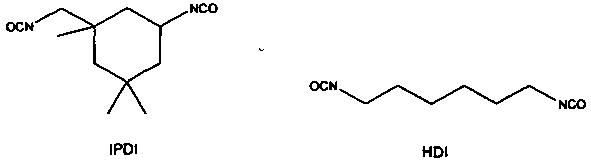

Es ist auch möglich, Derivate von Polyisocyanaten, z.B. ein Isocyanurat-basiertes oligo- oder polymeres Derivat eines oder mehrerer aliphatischer Polyisocyanate, bevorzugt ein Isocyanurat-basiertes oligo- oder polymeres Derivat von Hexamethylendiisocyanat und/oder Isophorondiisocyanat, einzusetzen.

Die CH-acide Verbindung (b2) kann aus der Gruppe der β-Dicarbonylverbindungen ausgewählt werden. Beispielhaft aber nicht limitierend für die Gruppe dieser Verbindungen seien Acetylaceton, Ethylacetoacetat, Malonsäure und deren Derivate, Methyl-2-cyanoacetat, Ethyl-3-oxobutanoat und Propandinitril genannt. Die pKₛ-Werte dieser Verbindungen liegen in einem Bereich von 5 bis 15, besonders bevorzugt in einem Bereich von 9 bis 13 (siehe dazu auch die Auflistung der Substanzen in K. P. C. Vollhardt, Organische Chemie, VCH-Verlag, 1990, S. 1038.). Bevorzugte Verbindungen im Sinne der Erfindung sind insbesondere die Derivate der Malonsäure, z. B. Dimethylmalonat, Diethylmalonat sowie Ethylacetoacetat.

Die mindestens eine CH-acide Verbindung (b2) hat ein Molekulargewicht von 90 - 400 g/mol, vorzugsweise von 90 - 200 g / mol, besonders bevorzugt von 120 - 200 g/mol.

Das molare Verhältnis der reaktiven Gruppen des Bindemittels zu den reaktiven Gruppen des Polyisocyanats beträgt 0,9 : 1 bis 1 : 0,9. Besonders bevorzugt wird ein molares Verhältnis von 1 : 1, um eine möglichst vollständige Umsetzung aller reaktiven Gruppen bei der Härtung der Lackzusammensetzung zu erreichen.

Das Verhältnis der Gewichtsanteile der Komponenten (b1) und (b2) liegt zwischen (b1): (b2) = 15 : 1 und (b1): (b2) = 1,5 : 1, vorzugsweise zwischen (b1) : (b2) = 12 : 1 und(b1):(b2)=2:1 1 beträgt.

Die Zusammensetzung kann als weitere Komponente (c) noch mindestens ein polymeres Amin enthalten. Unter polymeren Aminen werden solche Amine verstanden, die eine Molmasse von 1000 g/mol - 50000 g/mol aufweisen, bestimmt als Mw (Mw=Gewichtsmittel) des Molekulargewichts. Bevorzugt liegt die Molmasse der polymeren Amine bei 1000 g/mol - 30000 g/mol und besonders bevorzugt bei 1000 g/mol - 20000 g/mol.

Zur Berechnung des gewichtsmittleren Molekulargewichts siehe: B. Tierke, Makromolekulare Chemie, VCH-Verlag, Weinheim, 1997, S.206 ff. mittels GPC. Das Molekulargewicht kann bei Substanzen, die im Wesentlichen aus lediglich einem Molekül bestehen und keine Molmassenverteilung aufweisen, in der gängigen Literatur nachgeschlagen werden. Bei Substanzen, die eine Molmassenverteilung aufweisen, wird das Gewichtsmittel des Molekulargewichts, Mw, mit Hilfe der statischen Lichtstreuung bestimmt und als Molekulargewicht herangezogen (siehe hierzu: "Die Grundlagen der statischen Lichtstreuung" in M. D. Lechner, K. Gehrke, E. H. Nordmeier, "Makromolekulare Chemie", Birkhäuser Verlag, 1993, S. 208 ff.). Vorzugsweise werden polymere Amine mit amphiphilen Eigenschaften verwendet.

Das polymere Amin (c) enthält bevorzugt Fettsäuregruppen, Siloxan- oder Polysiloxangruppen oder Polyolefin-Gruppen. Besonders bevorzugt enthält das Amin Siloxan- oder Polysiloxangruppen.

Die Aminzahl der polymeren Amine liegt bei 2 mg KOH/g bis 40 mg KOH/g, bevorzugt bei 4 mg KOH/g bis 30 mg KOH/g und besonders bevorzugt bei 5 mg KOH/g bis 30 mg KOH/g.

Zur Definition und Berechnung der Aminzahl wird hierin auf Th. Brock, M. Groteklaes, P. Mischke, "Lehrbuch der Lacktechnologie", Vincentz Verlag, S. 78 verwiesen. Die Bestimmung der Aminzahl wird gemäß DIN 53176 mit Hilfe einer potentiometrischen Titration bestimmt.

Das Amin (c) ist vorzugsweise von 1 - 4 Gew.-% und besonders bevorzugt von 1,5 - 2,5 Gew.-%, bezogen auf die Gesamtformulierung des Härters, in der Lackzusammensetzung enthalten.

Die erfindungsgemäße Lackzusammensetzung wird bevorzugt in Klarlacken eingesetzt. Bei den Klarlacken handelt es sich um härtbare Klarlacke.

Ein Klarlack, der die erfindungsgemäße Lackzusammensetzung enthält, ist thermisch oder thermisch und mit aktinischer Strahlung härtbar. Dabei kann die thermisch oder thermisch und mit aktinischer Strahlung erfolgende Härtung durch die physikalische Härtung unterstützt werden.

Im Rahmen der vorliegenden Erfindung bedeutet der Begriff "physikalische Härtung" die Bildung eines Films durch Abgabe von Lösemittel aus Polymerlösungen oder Dispersionen. Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Das Vernetzungsmittel enthält reaktive funktionelle Gruppen, die zu den in den Polyurethanen vorhandenen reaktiven funktionellen Gruppen komplementär sind. Üblicherweise wird dies von der Fachwelt als Fremdvernetzung bezeichnet. Sind bereits die komplementären reaktiven funktionellen Gruppen oder autoreaktive funktionelle Gruppen, d. h. Gruppen, die "mit sich selbst" reagieren, in den Polyurethanen vorhanden, sind diese selbst vernetzend. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28, bis Seite 9, Zeilen 24, bekannt.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder gamma-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahlung wird üblicherweise durch radikalische oder kationische Photoinitiatoren initiiert.

Werden die thermische Härtung und die Härtung mit aktinischem Licht bei einem erfindungsgemäßen Beschichtungsstoff gemeinsam angewandt, spricht man auch von "Dual Cure".

Klarlacke, die die Zusammensetzung der vorliegenden Erfindung enthalten, sind besonders zur Lackierung von Automobilkarosserien oder Teilen davon geeignet.

Die Erfindung wird nachstehend anhand von Beispielen näher erläutert.

### Beispiele

### Beispiel 1

### Herstellung des Härtungsmittels H-1

Zunächst wurde ein mit einem Rührer bestückter Reaktor mit Stickstoffgas gespült. Danach wurden 1209,9 Massenanteile eines auf Hexamethylendiisocyanat-basierenden Polyisocyanats und 259,5 Massenanteile Diethylmalonat hinzugefügt. Nach 20 Minuten Rühren bei Raumtemperatur wurden 31,5 Massenanteile eines Polyamin-Additivs hinzugefügt und für weitere 20 Minuten bei Raumtemperatur gerührt.

Der Feststoffgehalt des resultierenden Härtungsmittels betrug 81,2 % bei einem NCO-Anteil von 17,8 %.

### Beispiel 2

### Herstellung des Härtungsmittels H-2

Zunächst wurde ein mit einem Rührer bestückter Reaktor mit Stickstoffgas gespült. Danach wurden 1162,3 Massenanteile eines auf Hexamethylendiisocyanat-basierenden Polyisocyanats, 108,9 Massenanteile Diethylmalonat, 114,4 Massenanteile eines aromatischen Lösemittels und 114,4 Massenanteile Butylacetat hinzugefügt. Die Mischung wurde noch 20 Minuten bei Raumtemperatur gerührt.

Der Feststoffgehalt des resultierenden Härtungsmittels betrug 77,5 % bei einem NCO-Anteil von 17,1 %.

### Beispiel 3

### Herstellung des Härtungsmittels H-3

Zunächst wurde ein mit einem Rührer bestückter Reaktor mit Stickstoffgas gespült. Danach wurden 1138,1 Massenanteile eines auf Hexamethylendiisocyanat-basierenden Polyisocyanats, 213,3 Massenanteile Diethylmalonat, 74,3 Massenanteile eines aromatischen Lösemittels und 74,3 Massenanteile Butylacetat hinzugefügt. Die Mischung wurde noch 20 Minuten bei Raumtemperatur gerührt. Der Feststoffgehalt des resultierenden Härtungsmittels betrug 75,9 % bei einem NCO-Anteil von 16,8 %.

### Beispiel 4

### Herstellung des Härtungsmittels H-4

Zunächst wurde ein mit einem Rührer bestückter Reaktor mit Stickstoffgas gespült. Danach wurden 1091,1 Massenanteile eines auf Hexamethylendiisocyanat-basierenden Polyisocyanats, 408,9 Massenanteile Diethylmalonat hinzugefügt. Die Mischung wurde noch 20 Minuten bei Raumtemperatur gerührt.

Der Feststoffgehalt des resultierenden Härtungsmittels betrug 72,7 % bei einem NCO-Anteil von 16,1 %.

### Beispiel 5

### Herstellung des Härtungsmittels H-5

Zunächst wurde ein mit einem Rührer bestückter Reaktor mit Stickstoffgas gespült. Danach wurden 1209,0 Massenanteile eines auf Hexamethylendiisocyanat-basierenden Polyisocyanats, 226,5 Massenanteile Diethylmalonat und 64,5 Massenanteile Acetonitril hinzugefügt. Die Mischung wurde noch 20 Minuten bei Raumtemperatur gerührt.

Der Feststoffgehalt des resultierenden Härtungsmittels betrug 80,6 % bei einem NCO-Anteil von 17,8 %.

### Beispiel 6

### Herstellung des Härtungsmittels H-6

Zunächst wurde ein mit einem Rührer bestückter Reaktor mit Stickstoffgas gespült. Danach wurden 278,3 eines auf Isophorondiisocyanat basierenden Polyisocyanats und 290,6 Massenanteile Diethylmalonat hinzugefügt und für 6 Stunden bei Raumtemperatur gerührt, um das Polyisocyanat zu lösen. Danach wurden 834,3 Massenanteile eines auf Hexamethylendiisocyanat-basierenden Polyisocyanats und 96,9 Massenteile Acetonitril hinzugefügt und für 20 Minuten bei Raumtemperatur gerührt.

Der Feststoffgehalt des resultierenden Härtungsmittels betrug 74,2 % bei einem NCO-Anteil von 15,5 %.

### Beispiel 7

### Vergleichsbeispiel 1 - Herstellung des Härtungsmittels H-7

Zunächst wurde ein mit einem Rührer bestückter Reaktor mit Stickstoffgas gespült. Danach wurden 1209,0 Massenanteile eines auf Hexamethylendiisocyanat basierenden Polyisocyanats, 145,5 Massenanteile eines aromatischen Lösemittels und 145,5 Massenanteile Butylacetat hinzugefügt und für 20 Minuten bei Raumtemperatur gerührt.

Der Feststoffgehalt des resultierenden Härtungsmittels betrug 80,6 % bei einem NCO-Anteil von 17,8 %.

### Beispiel 8

### Vergleichsbeispiel 2 - Herstellung des Härtungsmittels H-8

Zunächst wurde ein mit einem Rührer bestückter Reaktor mit Stickstoffgas gespült. Danach wurden 879,0 Massenanteile eines auf Isophorondiisocyanat basierenden Polyisocyanats, 310,5 Massenanteile eines aromatischen Lösemittels und 310,5 Massenanteile Butylacetat hinzugefügt. Die Reaktionsmischung wurde auf 120°C erhitzt, um das auf Isophorondiisocyanat basierende Polyisocyanat zu lösen. Danach wurde der Ansatz auf Raumtemperatur abgekühlt und für weitere 20 Minuten gerührt.

Der Feststoffgehalt des resultierenden Härtungsmittels betrug 58,6 % bei einem NCO-Anteil von 10,0 %.

### Beispiel 9

### Vergleichsbeispiel 3 - Herstellung des Härtungsmittels H-9

Zunächst wurde ein mit einem Rührer bestückter Reaktor mit Stickstoffgas gespült. Danach wurden 831,0 Massenanteile eines auf Hexamethylendiisocyanat basierenden Polyisocyanats, 207,0 Massenanteile eines auf Isophorondiisocyanat basierenden Polyisocyanats, 231,0 Massenanteile eines aromatischen Lösemittels und 231,0 Massenanteile Butylacetat hinzugefügt und das Reaktionsgemisch auf 120°C erhitzt, um das auf Isophorondiisocyanat basierende Polyisocyanat zu lösen. Danach wurde der Ansatz auf Raumtemperatur abgekühlt und für weitere 20 Minuten gerührt.

Der Feststoffgehalt des resultierenden Härtungsmittels betrug 69,2 % bei einem NCO-Anteil von 14,6 %.

### Herstellung des Polyacrylat-Polyols PA-1

Zunächst wurde ein mit einem Kühler bestückter Reaktor mit Stickstoffgas gespült. Danach wurden 720,9 Massenanteile eines aromatischen Lösemittels unter Rühren auf 140°C erhitzt.

Parallel wurden zwei separate Ansätze hergestellt. Ansatz 1 enthielt 230,1 Massenanteile Styrol, 613,5 Massenanteil Butylmethacrylat und 690,2 Massenanteile 4-Hydroxybutylacrylat. Ansatz 2 enthielt 92,0 Massenanteil eines aromatischen Lösemittels und 153,4 Massenanteile TBPEH.

Bei Erreichen einer Temperatur von 140°C wurde Ansatz 2 langsam und gleichmäßig während 285 min in den Lösemittel enthaltenden Reaktor gegeben. 15 Minuten nach Zugabe des Ansatzes 2 wurde Ansatz 1 gleichmäßig innerhalb von 240 min hinzugefügt. Nach Beendigung der Zugabe des Ansatzes 2 wurde zum Zwecke der Nachpolymerisation die Reaktionsmischung für weitere 120 min bei 140°C gerührt. Der Feststoffgehalt des resultierenden Produktes konnte mit 61%, die OH-Zahl mit 175 mg KOH/g (basierend auf den Feststoffen) und die Viskosität mit 14 dPa · s bei 23°C ermittelt werden.

### Herstellung der Polyacrylat-Polyole PA-2 und PA-3

Die Herstellung von PA-2 und PA-3 erfolgte gemäß der Vorschrift von PA-1. Lediglich die Ausgangmaterialien wurden angepasst:

| | | Massenanteil | |
|---|---|---|---|
| | | PA-2 | PA-3 |
| Lösemittel | Aromatisches Lösemittel | 616,9 | 609,0 |
| Ansatz 1 | Butylmethacrylat | 81,2 | 80,1 |
| | Styrol | 215,9 | 192,3 |
| | 4-Hydroxybutylacetat | 162,3 | 160,3 |
| | 2-Ethylhexylmethacrylat | 438,3 | 352,6 |
| | Cyclohexylmethacrylat | 141,2 | 128,2 |
| | 2-Hydroxypropylmethacrylat | 568,2 | 673,1 |
| | Acrylsäure | 16,2 | 16,0 |
| Ansatz 2 | Aromatisches Lösemittel | 97,4 | 96,2 |
| | TBPEH¹⁾ | 162,3 | 192,3 |

| | | | |
|---|---|---|---|
| ¹⁾ TBPEH = tert.-Butylperoxy-2-ethylhexanoat | | | |

Der Feststoffanteil von PA-2 betrug 65,0 %, die Säurezahl betrug 7,8 mg KOH/g und die OH-Zahl betrug 175 mg KOH/g (Säurezahl und OH-Zahl sind auf den Feststoff bezogen) bei einer Viskosität von 25 dPa · s bei 23°C.

Der Feststoffanteil von PA-3 betrug 64,0 %, die Säurezahl betrug 7,8 mg KOH/g und die OH-Zahl betrug 203 mg KOH/g (Säurezahl und OH-Zahl sind auf den Feststoff bezogen) bei einer Viskosität von 18 dPa · s bei 23°C.

### Herstellung des SCA-Harzes

Ein SCA-Harz besitzt Antiablaufeigenschaften. SCA steht für Sag-Control-Agent.

Ein 10 I Juvo-Reaktionsgefäß mit Heizmantel, Thermometer, Rührer und mit aufgesetztem Kühler wurde mit 1512,5 g eines aromatischen Lösemittels beschickt. Unter Rühren und Schutzgasatmosphäre (200 cm³/min Stickstoff) wurde das aromatische Lösemittel unter Überdruck (max. 3,5 bar) auf 160°C erhitzt. Mit Hilfe einer Messpumpe wurde eine Mischung aus 80,5 g Di-tert-butylperoxide und 201,0 g eines aromatischen Lösemittels gleichmäßig und tropfenweise innerhalb von 4,75 h hinzugegeben. 0,25 h nach Beginn der Zugabe wurden mit Hilfe einer Messpumpe 1283,5 g Styrol, 1115,0 g n-Butylacrylat, 693,5 g Hydroxyethylacrylat, 70,5 g Methacrylsäure und 43,5 g Dodecylmethacrylat (erhältlich unter der Bezeichnung "Methacrylsäureester 13" von der Firma Röhm Methacrylate / Evonik) innerhalb von 4 h gleichmäßig hinzugegeben. Nach Beendigung der Zugabe wurde die Temperatur noch für 2 h gehalten und dann das Produkt auf 60°C abgekühlt und durch einen 5 µm GAF-Bag gefiltert. Das resultierende Harz hatte eine Säurezahl von 15 mg KOH/g (nach DIN 53402), einen Feststoffgehalt von 65% +/- 1 (60 min, 130°C) und eine Viskosität von 5,0 dPa · s gemäß der Versuchsvorschrift nach DIN ISO 2884-1 (55% in Solventnaphtha).

### Harnstofffällung:

Ein 1 I-Reaktor wurde mit 84,7 g der Harzlösung befüllt und mit 5,88 g Butylacetat verdünnt. Danach wurden 2,24 g Benzylamin hinzugefügt und die Mischung für 30 min gerührt. Nach dieser Zeit wurde unter Aufwand hoher Scherkräfte eine Mischung von 1,76 g Hexamethylendiisocyanat und 3,42 g Butylacetat so hinzugefügt, dass eine Reaktionstemperatur von 40°C nicht überschritten wurde. Die so erhaltene Mischung hatte eine Viskosität von > 800mPas (10 s⁻¹) (Z3) (DIN ISO 2884-1) und einen Feststoffgehalt von 58,6-59,6% (60 min, 130°C).

### Herstellung der Thixotropierungspaste

In einem 10 I Juvo-Reaktionsgefäß mit Heizmantel, Thermometer, Rührer und mit aufgesetztem Kühler wurden 3166,1 g eines aromatischen Lösemittels hinzugefügt. Unter Schutzgasatmosphäre (200 cm³/min Stickstoff), Rühren und Erhitzen auf 156°C wurde eine Mischung aus 155,9 g Di-tert.-butylperoxid und 297,4 g aus einem aromatischen Lösemittel über einen Tropftrichter gleichmäßig innerhalb von 4,75 Stunden tropfenweise hinzugefügt. 0,25 Stunden nach Zugabe wurde durch einen Tropftrichter eine Mischung von 829,5 g Styrol, 2041,8 g n-Butylacetat, 893 g n-Butylmethacrylat, 1276,1 g Hydroxyethylacrylat, 63,8 g Acrylsäure und 1276,1 g 4-Hydroxybutylacrylat über 4 h gleichmäßig zugetropft. Nach Beendigung der Zugabe wurde die Temperatur für 2 Stunden aufrechterhalten, danach das Produkt auf 80°C abgekühlt und durch einen 5 µm GAF-Bag gefiltert. Das resultierende Harz hatte eine Säure-Zahl von 10 mg KOH/g (DIN 53402), einen Feststoffgehalt von 65% ± 1 (60 min, 130°C) und eine Viskosität von 20,0 dPa · s gemessen gemäß DIN ISO 2884-1.

Ein 1 I-Reaktor wurde mit 43,8 g der Harzlösung befüllt und diese mit 24,7 g Xylol und 23,4 g Butanol verdünnt. Nach 10 Minuten wurden 11,1 g Aerosil R812 unter Verwendung von Scherkraft hinzugefügt und die Mischung für weitere 30 Minuten Scherkraft ausgesetzt. Die erhaltene Mischung hatte eine Viskosität von 130 mPa · s (10 s⁻¹ (Z3) (DIN ISO 2884-1).

### Klarlackzusammensetzungen CC-1 bis CC-9

### Komponente 1

Die folgenden Ansätze wurden bereitet, um die erste Komponente des 2-Komponenten-Klarlacks zur Verfügung zu stellen.

| | CC-1 | CC-2 | CC-3 | CC-4 | CC-5 | CC-6 | CC-7 | CC-8 | CC-9 |
|---|---|---|---|---|---|---|---|---|---|
| PA-1 | | | | | | | 51,4 | | |
| PA-2 | | | | | | 48,2 | | | 48,2 |
| PA-3 | 49 | 49 | 49 | 49 | 49 | | | 49 | |
| SCA Harz¹ | 5,5 | 5,5 | 5,5 | 5,5 | 5,5 | 5,5 | 5,5 | 5,5 | 5,5 |
| Sulfonsäure enthaltender Katalysator | 8,4 | 8,4 | 8,4 | 8,4 | 8,4 | 8,4 | 8,4 | 8,4 | 8,4 |
| Thixotropierungspaste | 1,3 | 1,3 | 1,3 | 1,3 | 1,3 | 1,3 | 1,3 | 1,3 | 1,3 |
| Butylglykolacetat | 0,3 | 0,3 | 0,3 | 0,3 | 0,3 | 0,3 | 0,3 | 0,3 | 0,3 |
| BGA | 6,1 | 6,1 | 6,1 | 6,1 | 6,1 | 6,1 | 6,1 | 6,1 | 6,1 |
| Melaminharz | 5,8 | 5,8 | 5,8 | 5,8 | 5,8 | 5,8 | 5,8 | 5,8 | 5,8 |
| Dispergieradditiv | 0,7 | 0,7 | 0,7 | 0,7 | 0,7 | 0,7 | 0,7 | 0,7 | 0,7 |
| Silikonverlaufsadditiv | 0,1 | 0,1 | 0,1 | 0,1 | 0,1 | 0,1 | 0,1 | 0,1 | 0,1 |
| Butylacetat | 4,5 | 4,5 | 4,5 | 4,5 | 4,5 | 4,5 | 4,5 | 4,5 | 4,5 |
| Licht-Stabilisierungsadditiv | 2,1 | 2,1 | 2,1 | 2,1 | 2,1 | 2,1 | 2,1 | 2,1 | 2,1 |
| Aromatische Lösemittelmischung | 1 | 1 | 1 | 1 | 1 | 1 | 1 | 1 | 1 |
| Aromatisches Lösemittel | 7,4 | 7,4 | 7,4 | 7,4 | 7,4 | 7,4 | 7,4 | 7,4 | 7,4 |
| Butanol | 3,5 | 3.5 | 3,5 | 3,5 | 3,5 | 3,5 | 3,5 | 3,5 | 3,5 |
| Xylol | 5 | 5 | 5 | 5 | 5 | 5 | 5 | 5 | 5 |

| | | | | | | | | | |
|---|---|---|---|---|---|---|---|---|---|
| ¹SCA Harz, partiell gelöst in einem Gemisch aus einem aromatischen Lösemittel/Butylacetat | | | | | | | | | |

### Komponente 2

Als zweite Komponente wurden die Härter H1-H9, die gemäß der Beispiele 1-9 synthetisiert wurden, mit der ersten Komponente zu den Klarlacken CC1-CC9 gemäß untenstehender Tabelle kombiniert.

| | CC-1 | CC-2 | CC-3 | CC-4 | CC-5 | CC-6 | CC-7 | CC-8 | CC-9 |
|---|---|---|---|---|---|---|---|---|---|
| H-1 | 33 | | | | | | | | |
| H-2 | | 34 | | | | | | | |
| H-3 | | | 35 | | | | | | |
| H-4 | | | | 37 | | | | | |
| H-5 | | | | | 33 | | | | |
| H-6 | | | | | | 40 | | | |
| H-7 | | | | | | | 33 | | |
| H-8 | | | | | | | | 33 | |
| H-9 | | | | | | | | | 40 |

Dabei wurde so vorgegangen, dass jeweils 100 Gewichtsteile der Komponente 1 mit den in den gemäß obenstehender Tabelle angegebenen Gewichtsteilen der Komponente 2 homogenisiert und anschließend als oberste Klarlackschicht auf das Substrat aufgetragen wurden.

Die Eigenschaften der erfindungsgemäßen Zusammensetzungen wurden auf ihre optische Oberflächenqualität (Aussehen) und auf ihre Härteeigenschaften getestet. Hierfür wurden Metall-Testplatten zunächst mit einem kommerziell erhältlichen und elektrisch kathodisch abgeschiedenen, dann thermisch gehärteten Lack beschichtet. Darüber wurde ein kommerziell erhältlicher Füller aufgetragen und thermisch gehärtet. Eine kommerziell erhältliche schwarze Basislackierung der BASF Coatings AG wurde auf den Füller aufgetragen und für 10 Minuten bei 80°C abgelüftet. Der erfindungsgemäße Klarlack wurde darüber aufgetragen und gemeinsam mit dem Basislack für 22 Minuten bei 140°C gehärtet. Der resultierende Basislack hatte eine Schichtdicke von 7.5 um und der resultierende Klarlack hatte eine Schichtdicke von ungefähr 35 µm. Die Messung der Schichtdicke erfolgte dabei mit Hilfe eines MiniTest 4100-Gerätes der Firma ElektroPhysik. Die Messung der lackierten Stahlsubstrate erfolgte nach dem magnetisch-induktiven Verfahren in Anlehnung an die DIN 50981. Die Testplatten wurden auf ihre Oberflächengüte und Härte gestestet.

### Klarlackeigenschaften der Klarlacke CC-1 bis CC-6

| | Erfindungsgemäße Beispiele | | | | | |
|---|---|---|---|---|---|---|
| | CC-1 | CC-2 | CC-3 | CC-4 | CC-5 | CC-6 |
| Optische Oberflächenqualität (Aussehen)¹ | 2 | 2 | 2 | 2 | 2 | 2 |
| Mattheit (Aussehen)² | 1 | 1 | 1 | 1 | 1 | 1 |
| Langwelle (Aussehen)² | 5,5 | 5,5 | 4,0 | 3,1 | 3,2 | 4,0 |
| Kurzwelle (Aussehen)² | 12,7 | 12,7 | 12,5 | 12,3 | 12,4 | 11,3 |
| Mikrohärte [N/mm²]³ | 117 | 115 | 112 | 114 | 115 | 130 |
| AMTEC-Restglanz in [%] nach Reinigung⁴ | 77 | 75 | 73 | 78 | 77 | 75 |

| | | | | | | |
|---|---|---|---|---|---|---|
| ¹ Bestimmt durch optische Inspektion des gehärteten Lacks: 0=unebene Oberfläche, schlechte optische Oberflächenqualität; 1 =sehr matte Oberfläche, schlechte optische Oberflächenqualität; 2=glatte Oberfläche, sehr gute optische Oberflächenqualität ² Bestimmt mit einem Wavescan-DOI-Gerät der Firma BYK-Chemie ³ Bestimmt in Übereinstimmung mit DIN EN ISO 14577. Es wurde ein Fischerscope-Gerät der Firma Fischer Messtechnik mit einer Maximalkraft von 25,6 mN verwendet. ⁴ Bestimmt gemäß DIN 67530 in 20° Geometrie. | | | | | | |

### Klarlackeigenschaften der Klarlacke CC-7 bis CC-9

| | Vergleichsbeispiele | | |
|---|---|---|---|
| | CC-7 | CC-8 | CC-9 |
| Optische Oberflächenqualität (Aussehen)¹ | 1 | 0 | 0 |
| Mattheit (Aussehen)² | 46,3 | 1,5 | 1 |
| Langwelle (Aussehen)² | 15,8 | 6,8 | 5,3 |
| Kurzwelle (Aussehen)² | 26,2 | 12,2 | 11,4 |
| Mikrohärte [N/mm²]³ | 86 | 115 | 131 |
| AMTEC-Restglanz in [%]nach Reinigung⁴ | / | 75 | 73 |

| | | | |
|---|---|---|---|
| ¹ Bestimmt durch optische Inspektion des gehärteten Lacks: 0=unebene Oberfläche, schlechte optische Oberflächenqualität; 1 =sehr matte Oberfläche, schlechte optische Oberflächenqualität; 2=glatte Oberfläche, sehr gute optische Oberflächenqualität ² Bestimmt mit einem Wavescan-DOI-Gerät der Firma BYK-Chemie ³ Bestimmt in Übereinstimmung mit DIN EN ISO 14577. Es wurde ein Fischerscope-Gerät der Firma Fischer Messtechnik mit einer Maximalkraft von 25,6 mN verwendet. ⁴ Bestimmt gemäß DIN 67530 in 20° Geometrie | | | |

Die erfindungsgemäßen Klarlacke CC1-CC6 zeigen einen hervorragenden Glanz und weisen sehr gute Härteeigenschaften auf. Die Vergleichslacke CC7-CC9 haben nur einen unzureichenden Glanz, der den Anforderungen moderner Klarlacke nicht gerecht wird.

## Patentansprüche

1. Lackzusammensetzung umfassend mindestens
(a) ein OH-Gruppen tragendes Bindemittel und
(b) mindestens einen Härter enthaltend mindestens ein aliphatisches Polyisocyanat (b1),
**dadurch gekennzeichnet, dass** die Bindemittel-Komponente (a) und/oder die HärterKomponente (b) mindestens eine CH-acide Verbindung (b2) enthält.

2. Lackzusammensetzung nach Anspruch 1, **dadurch gekennzeichnet, dass** der Härter aus einer Mischung mindestens eines aliphatischen Polyisocyanats (b1) und mindestens einer CH-aciden Verbindung (b2) besteht oder diese enthält.

3. Lackzusammensetzung nach einem der Ansprüche 1 oder 2, **dadurch gekennzeichnet, dass** der Härter als weitere Komponente (c) mindestens ein polymeres Amin enthält.

4. Lackzusammensetzung nach Anspruch 3, **dadurch gekennzeichnet, dass** der Anteil der Komponente (c) von 1-4 Gew.-%, vorzugsweise von 1,5-2,5 Gew.-%, bezogen auf die Gesamtformulierung des Härters beträgt.

5. Lackzusammensetzung nach einem der Ansprüche 1-4, **dadurch gekennzeichnet, dass** das molare Verhältnis der reaktiven OH-Gruppen des Bindemittels zu den reaktiven unblockierten NCO-Gruppen des Polyisocyanats 0,1:1 bis 1:0,9 beträgt.

6. Lackzusammensetzung nach einem der Ansprüche 1-5, **dadurch gekennzeichnet, dass** das Verhältnis der Gewichtsanteile der Komponenten (b1) und (b2) zwischen (b1): (b2) =15:1 und (b1): (b2) = 1,5 : 1, vorzugsweise zwischen (b1): (b2) = 12 : 1 und (b1): (b2) = 2 : 1, beträgt.

7. Lackzusammensetzung nach einem oder mehreren der Ansprüche 1-6, **dadurch gekennzeichnet, dass** das mindestens eine aliphatische Polyisocyanat ein Isocyanurat-basiertes oligo- oder polymeres Derivat eines oder mehrerer aliphatischer Polyisocyanate, bevorzugt ein Isocyanurat-basiertes oligo- oder polymeres Derivat von Hexamethylendiisocyanat und/oder Isophorondiisocyanat, ist.

8. Lackzusammensetzung nach einem oder mehreren der Ansprüche 1-7, **dadurch gekennzeichnet, dass** die mindestens eine CH-acide Verbindung (b2) ein Molekulargewicht von 90-400 g/mol, vorzugsweise von 90-200 g/mol, besonders bevorzugt von 120-200 g/mol, aufweist.

9. Lackzusammensetzung nach einem oder mehreren der Ansprüche 1-8, **dadurch gekennzeichnet, dass** die mindestens eine CH-acide Verbindung (b2) ausgewählt ist aus der Gruppe der beta-Dicarbonylverbindungen.

10. Lackzusammensetzung nach einem oder mehreren der Ansprüche 3-9, **dadurch gekennzeichnet, dass** das mindestens eine polymere Amin (c) ein Molekulargewicht Mw von 1000-50000 g/mol, vorzugsweise von 1000-30000 g/mol, besonders bevorzugt von 1000-20000 g/mol, aufweist.

11. Lackzusammensetzung nach einem oder mehreren der Ansprüche 3-10, **dadurch gekennzeichnet, dass** das mindestens eine polymere Amin (c) eine Aminzahl von 2-40 mg KOH/g, vorzugsweise von 4-30 mg KOH/g, besonders bevorzugt von 5-30 mg KOH/g, aufweist.

12. Verwendung der Lackzusammensetzung nach einem oder mehreren der Ansprüche 1-11 in Klarlacken.

13. Klarlack erhältlich nach einem oder mehreren der Ansprüche 1-11.

14. Klarlack nach Anspruch 13, **dadurch gekennzeichnet, dass** es sich um einen thermisch härtbaren Klarlack oder um einen thermisch und mit aktinischer Strahlung härtbaren Klarlack handelt.

15. Klarlack nach einem oder mehreren der Ansprüche 13 und 14, **dadurch gekennzeichnet, dass** es sich um einen Zwei- oder Mehrkomponenten-Klarlack handelt.

16. Verwendung des Klarlacks nach einem oder mehreren der Ansprüche 13-15 zur Lackierung von Automobilkarosserien oder Teilen davon.

17. Automobilkarosserien oder Teile davon, die mit einer Beschichtung aus einem Klarlack nach einem oder mehreren der vorhergehenden Ansprüche 13-15 versehen sind.

## Claims

1. Coating composition comprising at least
(a) a binder carrying OH groups and
(b) at least one curing agent comprising at least one aliphatic polyisocyanate (b1), **characterized in that** the binder component (a)
and/or the curing agent component (b) comprises at least one CH-acidic compound (b2).

2. Coating composition according to Claim 1, **characterized in that** the curing agent comprises or consists of a mixture of at least one aliphatic polyisocyanate (b1) and of at least one CH-acidic compound (b2).

3. Coating composition according to either of Claims 1 and 2, **characterized in that** the curing agent comprises as a further component (c) at least one polymeric amine.

4. Coating composition according to Claim 3, **characterized in that** the fraction of component (c) is from 1%-4% by weight, preferably from 1.5%-2.5% by weight, based on the overall formulation of the curing agent.

5. Coating composition according to any of Claims 1-4, **characterized in that** the molar ratio of the reactive OH groups of the binder to the reactive unblocked NCO groups of the polyisocyanate is 0.1:1 to 1:0.9.

6. Coating composition according to any of Claims 1-5, **characterized in that** the ratio of the weight fractions of components (b1) and (b2) is between (b1):(b2) = 15:1 and (b1):(b2) = 1.5:1, preferably between (b1):(b2) = 12:1 and (b1):(b2) = 2:1.

7. Coating composition according to one or more of Claims 1-6, **characterized in that** the at least one aliphatic polyisocyanate is an isocyanurate-based oligomeric or polymeric derivative of one or more aliphatic polyisocyanates, preferably an isocyanurate-based oligomeric or polymeric derivative of hexamethylene diisocyanate and/or isophorone diisocyanate.

8. Coating composition according to one or more of Claims 1-7, **characterized in that** the at least one CH-acidic compound (b2) has a molecular weight of 90-400 g/mol, preferably of 90-200 g/mol, more preferably of 120-200 g/mol.

9. Coating composition according to one or more of Claims 1-8, **characterized in that** the at least one CH-acidic compound (b2) is selected from the group of β-dicarbonyl compounds.

10. Coating composition according to one or more of Claims 3-9, **characterized in that** the at least one polymeric amine (c) has a molecular weight Mw of 1000-50 000 g/mol, preferably of 1000-30 000 g/mol, more preferably of 1000-20 000 g/mol.

11. Coating composition according to one or more of Claims 3-10, **characterized in that** the at least one polymeric amine (c) has an amine number of 2-40 mg KOH/g, preferably of 4-30 mg KOH/g, more preferably of 5-30 mg KOH/g.

12. Use of the coating composition according to one or more of Claims 1-11 in clearcoats.

13. Clearcoat obtainable according to one or more of Claims 1-11.

14. Clearcoat according to Claim 13, **characterized in that** it is a thermally curable clearcoat or a clearcoat curable thermally and with actinic radiation.

15. Clearcoat according to one or more of Claims 13 and 14, **characterized in that** it is a two-component or multicomponent clearcoat.

16. Use of the clearcoat according to one or more of Claims 13-15 to finish automobile bodies or parts thereof.

17. Automobile bodies or parts thereof provided with a coating comprising a clearcoat according to one or more of preceding Claims 13-15.

## Revendications

1. Composition de peinture comprenant au moins
(a) un liant portant des groupes OH et
(b) au moins un durcisseur contenant au moins un polyisocyanate aliphatique (b1).
**caractérisée en ce que** le composant-liant (a) et/ou le composant-durcisseur (b) contient/contiennent au moins un composé à groupe CH acide (b2).

2. Composition de peinture selon la revendication 1, **caractérisée en ce que** le durcisseur consiste en un mélange d'au moins un polyisocyanate aliphatique (b1) et d'au moins un composé à groupe CH acide (b2) ou contient ce mélange.

3. Composition de peinture selon la revendication 1 ou 2, **caractérisée en ce que** le durcisseur contient comme autre composant (c) au moins une amine polymère.

4. Composition de peinture selon la revendication 3, **caractérisée en ce que** la proportion du composant (c) est de 1-4 % en poids, de préférence de 1,5-2,5 % en poids, par rapport à la composition totale du durcisseur.

5. Composition de peinture selon l'une quelconque des revendications 1 à 4, **caractérisée en ce que** le rapport molaire des groupes OH réactifs du liant aux groupes NCO non bloqués réactifs du polyisocyanate vaut de 0,1:1 à 1:0,9.

6. Composition de peinture selon l'une quelconque des revendications 1 à 5, **caractérisée en ce que** le rapport des proportions pondérales des composants (b1) et (b2) est compris entre (b1) : (b2) = 15 : 1 et (b1) : (b2) = 1,5 : 1, de préférence entre (b1) (b2) = 12 : 1 et (b1) : (b2) - 2 : 1.

7. Composition de peinture selon une ou plusieurs des revendications 1 à 6, **caractérisée en ce que** ledit au moins un polyisocyanate aliphatique est un dérivé oligomère ou polymère, à base d'isocyanurate, d'un ou plusieurs polyisocyanates aliphatiques, de préférence un dérivé oligomère ou polymère, à base d'isocyanurate, d'hexaméthylènediisocyanate et/ou d'isophorone-diisocyanate.

8. Composition de peinture selon une ou plusieurs des revendications 1 à 7, **caractérisée en ce que** ledit au moins un composé à CH acide (b2) présente une masse moléculaire de 90-400 g/mole, de préférence de 90-200 g/mole, de façon particulièrement préférée de 120-200 g/mole.

9. Composition de peinture selon une ou plusieurs des revendications 1 à 8, **caractérisée en ce que** ledit au moins un composé à CH acide (b2) est choisi dans le groupe des composés bêta-dicarbonyle.

10. Composition de peinture selon une ou plusieurs des revendications 3 à 9, **caractérisée en ce que** ladite au moins une amine polymère (c) présente une masse moléculaire Mw de 1 000 - 50 000 g/mole, de préférence de 1 000 30 000 g/mole, de façon particulièrement préférée de 1 000 - 20 000 g/mole.

11. Composition de peinture selon une ou plusieurs des revendications 3 à 10, **caractérisée en ce que** ladite au moins une amine polymère (c) présente un indice de groupes amino de 2-40 mg de KOH/g, de préférence de 4-30 mg de KOH/g, de façon particulièrement préférée de 5-30 mg de KOH/g.

12. Utilisation de la composition de peinture selon une ou plusieurs des revendications 1 à 11 dans des vernis.

13. Vernis pouvant être obtenu selon une ou plusieurs des revendications 1 à 11.

14. Vernis selon la revendication 13, **caractérisé en ce qu'**il s'agit d'un vernis durcissable thermiquement ou d'un vernis durcissable thermiquement et par un rayonnement actinique.

15. Vernis selon une ou plusieurs des revendications 13 et 14, **caractérisé en ce qu'**il s'agit d'un vernis bi- ou multicomposant.

16. Utilisation du vernis selon une ou plusieurs des revendications 13 à 15, pour la mise en peinture de carrosseries d'automobiles ou de parties de celles-ci.

17. Carrosseries d'automobiles ou parties de celles-ci, qui sont munies d'un revêtement de vernis selon une ou plusieurs des revendications 13 à 15.
